# EUROPEAN PATENT APPLICATION

(11) **EP 4 636 469 A1**
(43) Date of publication of application: **22.10.2025**
(21) Application number: 22968626.6
(22) Date of filing: 16.12.2022
(51) Int. Cl.: G02F 1/1335, G02F 1/1333, G02F 1/13357

(54) **DISPLAY DEVICE**

(71) Applicant: LG Electronics Inc., Yeongdeungpo-gu Seoul 07336 (KR)
(72) Inventor: KIM, Seho, Seoul 06772 (KR); OH, Jinmyung, Seoul 06772 (KR)
(74) Representative: Schott, Jakob Valentin
(86) International application number: PCT/KR2022/020637
(87) International publication number: WO 2024/128366

(57) **Abstract**

A display device is disclosed. The display device of the present disclosure may include: a display panel; a frame positioned at a rear of the display panel and to which the display panel is coupled; a substrate which is positioned between the display panel and the frame and which is coupled to the frame; a light assembly which is mounted on the substrate; a conductive test point which is formed on the substrate and positioned adjacent to the light assembly; and a tape attached to the substrate, having a first hole formed in which the light assembly is positioned, and covering the test point.

## Description

### TECHNICAL FIELD

The present disclosure relates to a display device.

### BACKGROUND ART

With the development of information society, there has been a growing demand for various types of display devices. In order to meet such demand, various display devices, such as a liquid crystal display (LCD) device, a plasma display panel (PDP), an electro luminescent display (ELD), a vacuum fluorescent display (VFD), an organic light emitting diode (OLED) display, and the like, have been developed and used.

Among them, an LCD panel includes a TFT substrate and a color substrate that are opposite each other with a liquid crystal layer interposed therebetween, and can display an image using light provided from a backlight unit.

Recently, numerous research has been conducted on a structure for preventing static electricity from being introduced into a light source, such as LEDs, or an IC chip for controlling a plurality of light sources.

### DETAILED DESCRIPTION OF INVENTION

### TECHNICAL PROBLEMS

It is an object of the present disclosure to solve the above and other problems.

Another object may be to provide a structure that can prevent static electricity from being introduced into an LED and/or an IC chip.

Another object may be to provide a structure that can prevent static electricity from being introduced into an LED and/or an IC chip while maximizing an attachment area between a reflective sheet and a substrate.

Another object may be to provide a structure that can prevent static electricity from being introduced into a light source in various attachment directions of a reflective sheet.

Another object may be to provide a heat dissipation structure that can prevent heat generation due to prolonged use of a high-brightness screen.

### TECHNICAL SOLUTION

In accordance with an aspect of the present disclosure for achieving the above and other objects, a display device includes: a display panel; a frame positioned behind the display panel and to which the display panel is coupled; a substrate disposed between the display panel and the frame and coupled to the frame; a light assembly mounted on the substrate; a conductive test point formed on the substrate and positioned adjacent the light assembly; and a tape attached to the substrate, having a first hole in which the light assembly is positioned, and covering the test point.

### EFFECT OF INVENTION

A display device according to the present disclosure has the following effects.

According to at least one of the embodiments of the present disclosure, it is possible to provide a structure capable of preventing static electricity from being introduced into an LED and/or an IC chip.

According to at least one of the embodiments of the present disclosure, it is possible to provide a structure capable of preventing static electricity from being introduced into an LED and/or an IC chip while maximizing an attachment area between a reflective sheet and a substrate.

According to at least one of the embodiments of the present disclosure, it is possible to provide a structure capable of preventing static electricity from being introduced into a light source in various attachment directions of a reflective sheet.

According to at least one of the embodiments of the present disclosure, it is possible to provide a heat dissipation structure capable of preventing heat generation due to prolonged use of a high-brightness screen.

Further scope of applicability of the present disclosure will become apparent from the following detailed description. However, it should be understood that the detailed description and specific embodiments such as preferred embodiments of the present disclosure are given by way of example only, since various changes and modifications within the idea and scope of the present disclosure may be clearly understood by those skilled in the art.

### BRIEF DESCRIPTION OF THE DRAWING

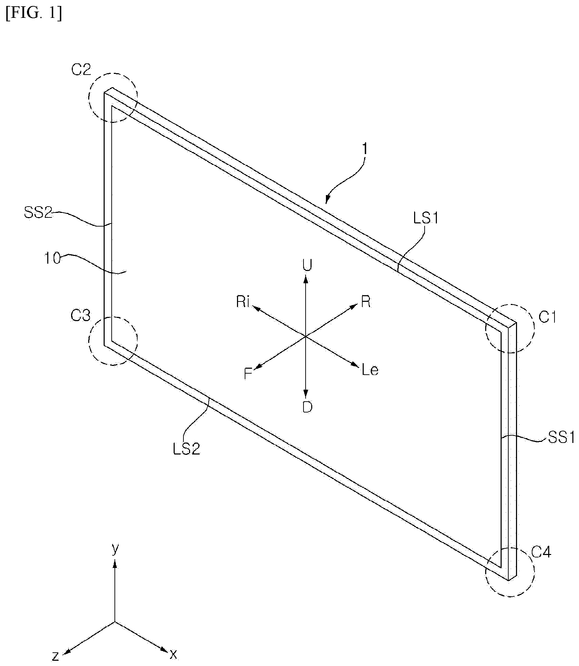

FIGS. 1 to 21 are diagrams illustrating examples of a display device according to embodiments of the present disclosure.

### MODE FOR CARRYING OUT THE INVENTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In the following description, a suffix such as "module" and "unit" may be used to refer to elements or components. Use of such a suffix herein is merely intended to facilitate description of the specification, and the suffix itself is not intended to give any special meaning or function.

In the present disclosure, that which is well known to one of ordinary skill in the relevant art has generally been omitted for the sake of brevity. The accompanying drawings are used to help easily understand various technical features and it should be understood that the embodiments disclosed herein are not limited by the accompanying drawings. As such, the present disclosure should be construed to extend to any alterations, equivalents, and substitutes in addition to those which are particularly set out in the accompanying drawings.

Although the terms "first", "second", etc. may be used herein to describe various elements, these elements should not be limited by these terms. These terms are only used to distinguish one element from another.

It will be understood that when a component is referred to as being "coupled" or "connected" to another component, it may be directly coupled or connected to another component, or intervening components may be present. In contrast, when a component is referred to as being "directly coupled" or "directly connected" to another component, there are no intervening components present.

A singular representation may include a plural representation unless the context clearly indicates otherwise.

Terms such as "comprises or includes" or "has" are used herein and should be understood that they are intended to indicate an existence of features, numbers, steps, operations, elements, components, or combinations thereof, disclosed in the specification, but do not preclude the presence or addition of one or more other features, numbers, steps, operations, elements, components, or combinations thereof.

The directions "up (U)", "down (D)", "left (Le)", "right (Ri)", "front (F)", and "rear (R)" shown in the drawings are used only for convenience of description, and the technical concept disclosed in this specification is not limited by these directions.

Referring to FIG. 1, a display device 1 may include a display panel 10. The display panel 10 may display a screen. The display panel 10 may display an image.

The display device 1 may include a first long side LS1, a second long side LS2 opposite the first long side LS1, a first short side SS1 adjacent to the first long side LS1 and the second long side LS2, and a second short side SS2 opposite the first short side SS1. For ease of explanation, it is illustrated and described that lengths of the first and second long sides LS1 and LS2 are greater than lengths of the first and second short sides SS1 and SS2. However, the lengths of the first and second long sides LS1 and LS2 may be substantially equal to the lengths of the first and second short sides SS1 and SS2.

A direction parallel to the long sides LS1 and LS2 of the display device 1 may be referred to as a left-right direction (Ri, Le). A direction parallel to the short sides SS1 and SS2 of the display device 1 may be referred to as an up-down direction (U, D). A direction perpendicular to the long sides LS1 and LS2 and the short sides SS1 and SS2 of the display device 1 may be referred to as a front-rear direction (F, R).

A direction in which the display panel 10 displays an image may be referred to as a front (F, z), and a direction opposite to the front may be referred to as a rear (R). The first long side LS1 may be referred to as an upper side (U, y). The second long side LS2 may be referred to as a lower side (D). The first short side SS1 may be referred to as a left side (Le, x). The second short side SS2 may be referred to as a right side (Ri).

The first long side LS1, the second long side LS2, the first short side SS1, and the second short side SS2 may be referred to as edges of the display device 1. In addition, points where the first long side LS1, the second long side LS2, the first short side SS1, and the second short side SS2 meet one another may be referred to as corners. For example, a point where the first long side LS1 and the first short side SS1 meet may be referred to as a first corner C1; a point where the first long side LS1 and the second short side SS2 meet may be referred to as a second corner C2; a point where the second long side LS2 and the second short side SS2 meet may be referred to as a third corner C3; and a point where the second long side LS2 and the first short side SS1 meet may be referred to as a fourth corner C4.

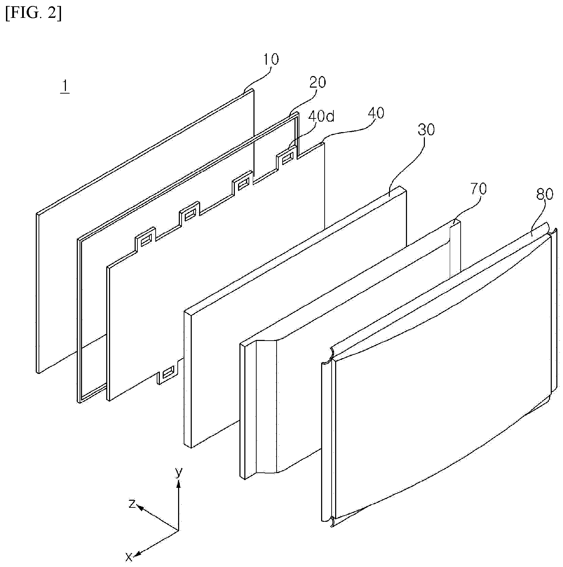

Referring to FIG. 2, the display device 1 may include a display panel 10, a guide panel 20, a backlight unit (30, 40), a frame 70, and a back cover 80.

The display device 1 may further include a front cover. The front cover may cover at least a partial area of the front and lateral surfaces of the display panel 10. The front cover may be divided into a front cover positioned on the front surface of the display panel 10, and a side cover positioned on the lateral surface of the display panel 10. The front cover and the side cover may be provided separately. Any one of the front cover and the side cover may be omitted.

The display panel 10 may define the front surface of the display device 1 and may display an image. The display panel 10 may display an image in such a manner that each of a plurality of pixels outputs red, green or blue (RGB) light in accordance with timing. The display panel 10 may be divided into an active area in which an image is displayed and a de-active area in which no image is displayed. The display panel 10 may include a front substrate and a rear substrate that are opposite each other with a liquid crystal layer interposed therebetween. The display panel 10 may be referred to as an LCD panel.

The front substrate may include a plurality of pixels, each of which consists of red, green, and blue sub-pixels. The front substate may output light corresponding to red, green or blue color in response to a control signal.

The rear substrate may include switching elements. The rear substrate may switch a pixel electrode. For example, the pixel electrode may change the molecular arrangement of a liquid crystal layer in response to a control signal input from the outside. The liquid crystal layer may include liquid crystal molecules. The arrangement of the liquid crystal molecules may be changed according to a voltage difference between the pixel electrode and a common electrode. The liquid crystal layer may transmit light provided from the backlight unit (30, 40) to the front substrate or block the light.

The guide panel 20 may be positioned at the rear of the display panel 10. The guide panel 20 may support a portion of the display panel 10. The guide panel 20 may extend along a periphery of the display panel 10. The guide panel 20 may cover the lateral surface of the display panel 10. The guide panel 20 may be coupled to the display panel 10. The guide panel 20 may be coupled to a frame 70 described later. The guide panel 20 may support the display panel 10. The guide panel 20 may be referred to as a side frame or a middle cabinet.

The backlight unit (30, 40) may be positioned at the rear of the display panel 10. The backlight unit (30, 40) may be positioned at the front of the frame 70. The backlight unit (30, 40) may be coupled to the frame 70. The backlight unit (30, 40) may be driven by a full driving scheme or a partial driving scheme. For example, the backlight unit (30, 40) may be driven by a partial driving scheme such as local dimming or impulsive driving. The backlight unit (30, 40) may include an optical sheet 40 and an optical layer 30.

The optical sheet 40 may allow light from the light source to be uniformly transmitted to the display panel 10. The optical sheet 40 may consist of a plurality of layers. For example, the optical sheet 40 may include a prism sheet, a diffusion sheet, and the like.

The optical sheet 40 may include a coupling portion 40d. The coupling portion 40d may be coupled to the front cover, the frame 70, and/or the back cover 80. The coupling portion 40d may be coupled to a structure disposed on the front cover, the frame 70, and/or the back cover 80.

The frame 70 may be positioned behind the display panel 10. The frame 70 may support some components of the display panel 10. For example, the backlight unit (30, 40), a printed circuit board (PCB) on which a plurality of electronic elements are mounted, and the like may be coupled or fixed to the frame 70. The frame 70 may include a metal material such as stainless steel, aluminum alloy, electro galvanized coil (EGI), etc. The frame 70 may be referred to as a main frame, a module cover, or a cover bottom.

The back cover 80 may be positioned at the rear of the frame 70. The back cover 80 may cover the rear of the frame 70. The back cover 80 may be coupled to the frame 70. For example, the back cover 80 may include a metal material. For example, the back cover 80 may be an injection-molded part made of resin. The back cover 80 may define the rear surface of the display device 1.

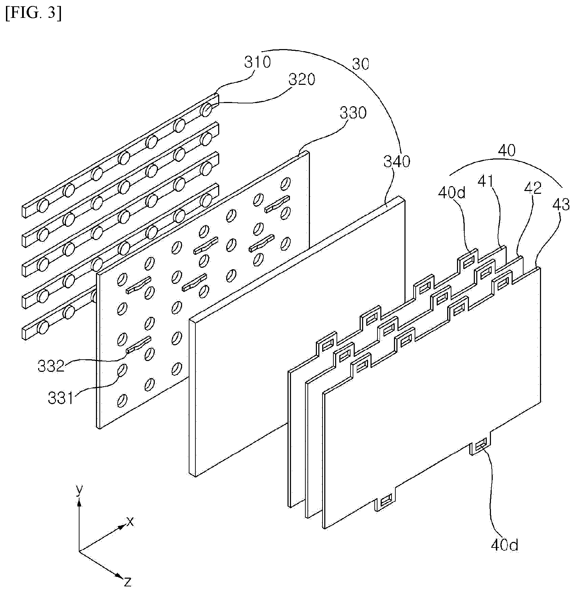

Referring to FIG. 3, the backlight unit (30, 40) may include an optical layer 30, and an optical sheet 40 positioned at the front of the optical layer 30.

The optical layer 30 may include a substrate 310. For example, the substrate 310 may be provided in the form of a plurality of straps that extend in the left-right direction (Le, Ri) and are spaced apart from each other in the up-down direction (U, D). As another example, the substrate 310 may be provided in the form of a rectangular plate. At least one light assembly 320 to be described later may be mounted on the substrate 310. An electrode pattern for connecting an adapter and the light assembly 320 may be formed on the substrate 310. For example, a carbon nanotube (CNT) electrode pattern may be formed on the substrate 310 to connect the light assembly 320 and the adapter. The substrate 310 may be made of at least one of polyethylene terephthalate (PET), glass, polycarbonate (PC), and silicon. The substrate 310 may be a printed circuit board (PCB).

The optical layer 30 may include at least one light assembly 320. The light assembly 320 may provide light forward. The light assembly 320 may provide light to the display panel 10. The light assembly 320 may be a light emitting diode (LED) chip or an LED package including at least one LED chip. The light assembly 320 may consist of a colored LED that emits at least one of red, green and blue light, or a white LED. The colored LED may include at least one of a red LED, a green LED, and a blue LED.

The optical layer 30 may include a reflective sheet 330. The reflective sheet 330 may be positioned at the front of the substrate 310. The reflective sheet 330 may be disposed between the substrate 310 and a diffusion plate 340 (to be described later). The reflective sheet 330 may be provided on a front surface of the substrate 310. The reflective sheet 330 may be coupled to the front surface of the substrate 310.

The reflective sheet 330 may include a hole 331 in which the light assembly 320 is positioned. A plurality of holes 331 may be provided. The reflective sheet 330 may be made of a reflective material. The reflective sheet 330 may include at least one of metal and metal oxide. For example, the reflective sheet 330 may include a metal and/or a metal oxide having a high reflectance such as at least one of aluminum (Al), silver (Ag), gold (Au), and titanium dioxide (TiO2). For example, resin may be deposited on or applied to the reflective sheet 330. The reflective sheet 330 may reflect light, which is emitted from the light assembly 320 or reflected from the diffusion plate 340, forward.

The optical layer 30 may include a diffusion plate 340. The diffusion plate 340 may diffuse and/or reflect light emitted from the light assembly 320. The diffusion plate 340 may be disposed between the reflective sheet 330 and the optical sheet 40. The diffusion plate 340 may be spaced forward from the reflective sheet 330.

A supporter 332 may be disposed between the diffusion plate 340 and the reflective sheet 330. One end of the supporter 332 may be fixed to the reflective sheet 330. The other end of the supporter 332 may support the diffusion plate 340. The diffusion plate 340 may be separated from the reflective sheet 330 by the supporter 332.

An air gap may be formed between the reflective sheet 330 and the diffusion plate 340. The air gap may serve as a buffer. The air gap may allow light emitted from the light assembly 320 to spread widely.

The optical sheet 40 may be positioned at the front of the diffusion plate 340. The optical sheet 40 and the display panel 10 may be opposite each other with respect to the guide panel 20. The optical sheet 40 may be adjacent to or in contact with a front surface of the diffusion plate 340. The optical sheet 40 may consist of a plurality of sheets. For example, the optical sheet 40 may include a plurality of optical sheets 40 having different functions. For example, the optical sheet 40 may include one or more prism sheets and/or one or more diffusion sheets. The plurality of optical sheets 40 may be adhered to each other or in close contact with each other. For example, the optical sheet 40 may include a first optical sheet 41, a second optical sheet 42, and a third optical sheet 43. For example, the first optical sheet 41 may be a diffusion sheet, and the second optical sheet 42 and the third optical sheet 43 may be prism sheets. The diffusion sheet 41 may prevent light from the diffusion plate 340 from being partially concentrated, thereby achieving more uniform distribution of light. The prism sheets 42 and 43 may collect light from the diffusion plate 340 and provide the light to the display panel 10. Meanwhile, the diffusion sheet and the prism sheet may vary in number and/or position.

The coupling portion 40d of the optical sheet 40 may be coupled to the frame 70 and/or the back cover 80. The coupling portion 40d may be formed at each of the plurality of optical sheets 40 (41, 42, and 43). The coupling portion 40d may be formed on at least one of upper and lower sides of the optical sheet 40.

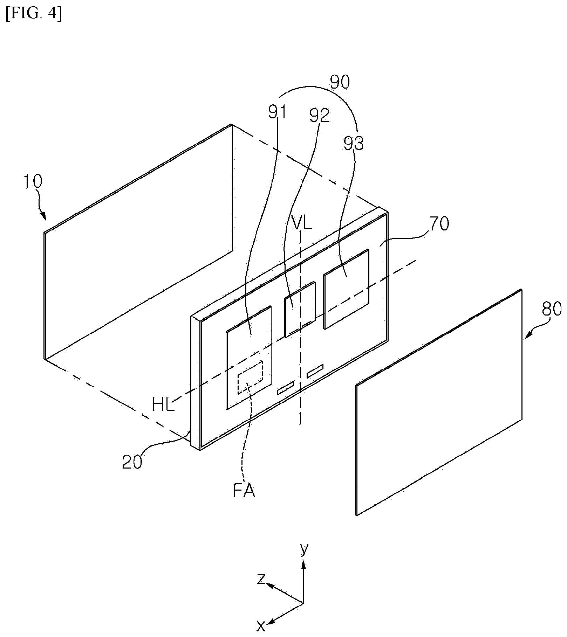

Referring to FIG. 4, boards 90 may be coupled to the frame 70 at the rear of the frame 70. The board 90 may include a plurality of electronic elements. The board 90 may be a printed circuit board (PCB), and may be electrically connected to electronic components of the display device 10.

The boards 90 may include a power supply board 91 configured to provide power to each component of the display device 1, a timing controller board 92 configured to provide an image (or video) signal to the display panel 10, and a main board 93 configured to control the display device 1.

For example, the power supply board 91 may be adjacent to a left side of the frame 70. The main board 93 may be adjacent to a right side of the frame 70. The timing controller board 92 may be disposed between the power supply board 91 and the main board 93.

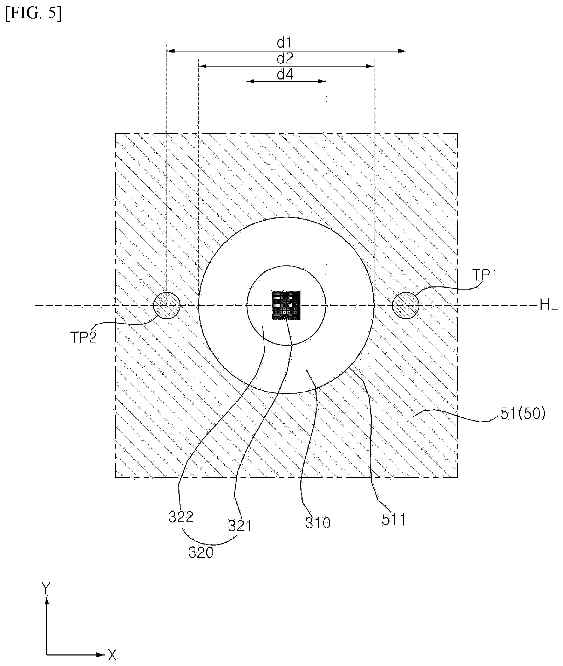

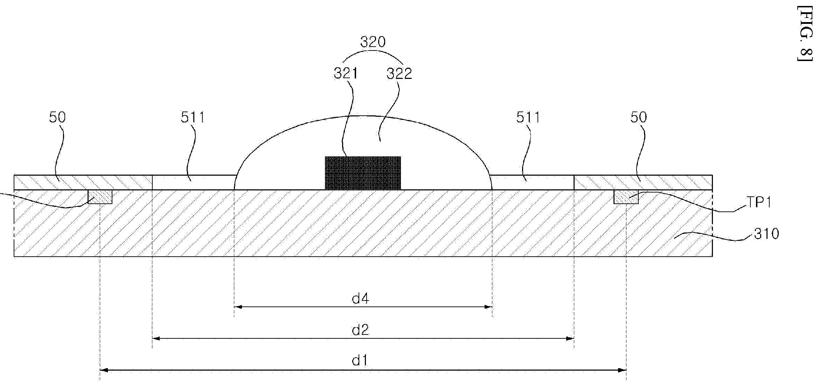

Referring to FIG. 5 and FIG. 8, the light assembly 320 may include a light source 321. A plurality of light sources 321 may be provided. The plurality of light sources 321 may be mounted on the substrate 310. The plurality of light sources 321 may be mounted on one surface of the substrate 310. The plurality of light sources 321 may be spaced apart from each other on the substrate 310. The plurality of light sources 321 may be arranged in rows and columns on the substrate 310 with spacing therebetween. The rows may be defined in the left-right direction, and the columns may be defined in the up-down direction. The plurality of light sources 321 may be spaced apart from each other at equal intervals in the left-right direction. The plurality of light sources 321 may be spaced apart from each other at equal intervals in the up-down direction. For example, the light source 321 may be a light emitting diode (LED) chip or an LED package including at least one LED chip. For example, the light source 321 may be a colored LED that emits at least one of red, blue and green light, or a white LED. For example, the light source 321 may be a mini-LED.

The light assembly 320 may include a lens 322. The lens 322 may cover the light source 321. For example, the lens 322 may have a substantially hemispherical shape. The lens 322 may include at least one of silicone, polymethyl methacrylate (PMMA), and polycarbonate (PC). Light provided by the light source 321 may be refracted or reflected by the lens 322 and then be spread to a beam angle wider than that of the light source 321. In addition, a sufficient amount of light may be secured in a wide range in relation to the number and position of the light sources 321. A plurality of lenses 322 may be provided. Each of the plurality of lenses 322 may cover a respective one of the plurality of light sources 321.

A first test point TP1 may be formed on the substrate 310. The first test point TP1 may be formed of a conductive material. For example, the first test point TP1 may include copper foil. The first test point TP1 may be positioned adjacent to the light assembly 320.

A second test point TP2 may be formed on the substrate 310. The second test point TP2 may be formed of a conductive material. For example, the second test point TP2 may include copper foil. The second test point TP2 may be positioned adjacent to the light assembly 320. The second test point TP2 and the first test point TP1 may be opposite each other with respect to the light assembly 320. The first test point TP1 and the second test point TP2 may be spaced apart from each other (a separation distance d1).

The first and second test points TP1 and TP2 may be electrically connected to the light source 321. The first test point TP1, the light source 321, and the second test point TP2 may be electrically connected by an electrode pattern (not shown) formed on the substrate 310. The first and second test points TP1 and TP2 may be formed to check whether the light source 321 is mounted on the substrate 310. For example, SMT (Surface Mounter Technology) testing on the light source 321 may be performed using the first and second test points TP1 and TP2.

A tape 50 may be attached to the substrate 310. For example, the tape 50 may be a double-sided tape. The tape 50 may be formed of a transparent material.

The tape 50 may include a first tape 51 attached to one surface of the substrate 310. The first tape 51 may attach the reflective sheet 330 to the one surface of the substrate 310. The first tape 51 may include a first hole 511. The light assembly 320 may be positioned in the first hole 511. The light assembly 320 may protrude forward of the first tape 51 through the first hole 511. The first tape 51 may cover the first and second test points TP1 and TP2 formed on the one surface of the substrate 310. A diameter d2 of the first hole 511 may be less than the separation distance d1 between the first test point TP1 and the second test point TP2. The diameter d2 of the first hole 511 may be greater than a diameter d4 of the lens 320.

Referring to FIGS. 5, 6, and 7, the first and second test points TP1 and TP2 may be placed in various positions.

Referring to FIG. 5, the first and second test points TP1 and TP2 may be located on a horizontal line HL 321 that extends in the left-right direction (or a horizontal direction) and passes through the center of the light source 321. The first test point TP1 and the second test point TP1 may be opposite each other with respect to the light assembly 320 on the horizontal line HL. For example, the first test point TP1 may be positioned to the left of the light assembly 320, and the second test point TP2 may be positioned to the right of the light assembly 320. A separation distance d1 between the first test point TP1 and the second test point TP2 in the horizontal direction may be greater than a diameter d2 of the first hole 511 in the horizontal direction. The diameter d2 of the first hole 511 in the horizontal direction may be greater than a diameter d4 of the lens 322 in the horizontal direction. Accordingly, the first tape 51 may cover the first and second test points TP1 and TP2.

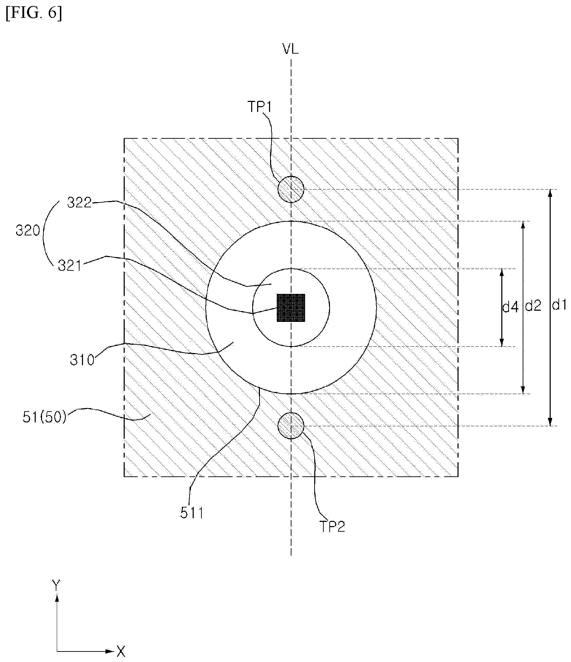

Referring to FIG. 6, the first and second test points TP1 and TP2 may be located on a vertical line VL that extends in the up-down direction (or a vertical direction) and passes through the center of the light source 321. The first test point TP1 and the second test point TP2 may be opposite each other with respect to the light assembly 320 on the vertical line VL. For example, the first test point TP1 may be positioned above the light assembly 320, and the second test point TP2 may be positioned below the light assembly 320. A separation distance d1 between the first test point TP1 and the second test point TP2 in the vertical direction may be greater than a diameter d2 of the first hole 511 in the vertical direction. The diameter d2 of the first hole 511 in the vertical direction may be greater than a diameter d4 of the lens 322 in the vertical direction. Accordingly, the first tape 51 may cover the first and second test points TP1 and TP2.

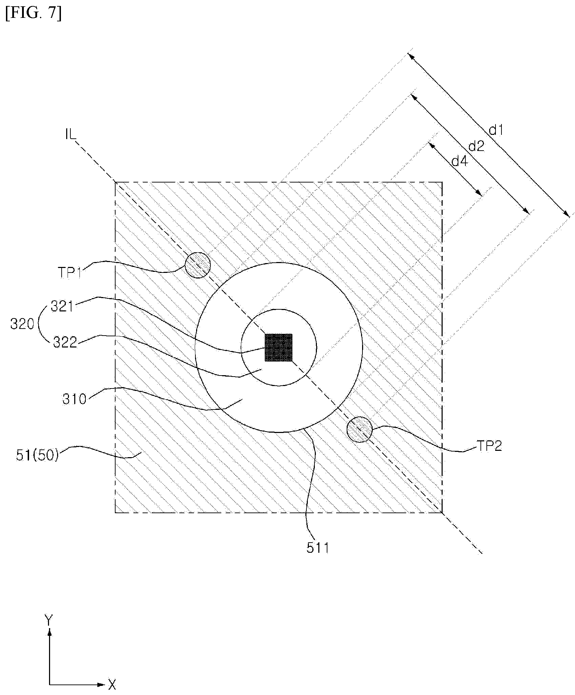

Referring to FIG. 7, the first and second test points TP1 and TP2 may be located on an inclined line IL that extends in a diagonal direction and passes through the center of the light source 321. The first test point TP1 and the second test point TP2 may be opposite each other with respect to the light assembly 320 on the inclined line IL. For example, the first test point TP1 may be positioned to the left and above the light assembly 320, and the second test point TP2 may be positioned to the right and below the light assembly 320. A separation distance d1 between the first test point TP1 and the second test point TP2 in the diagonal direction may be greater than a diameter d2 of the first hole 511 in the diagonal direction. The diameter d2 of the first hole 511 in the diagonal direction may be greater than a diameter d4 of the lens 322 in the diagonal direction. Accordingly, the first tape 51 may cover the first and second test points TP1 and TP2.

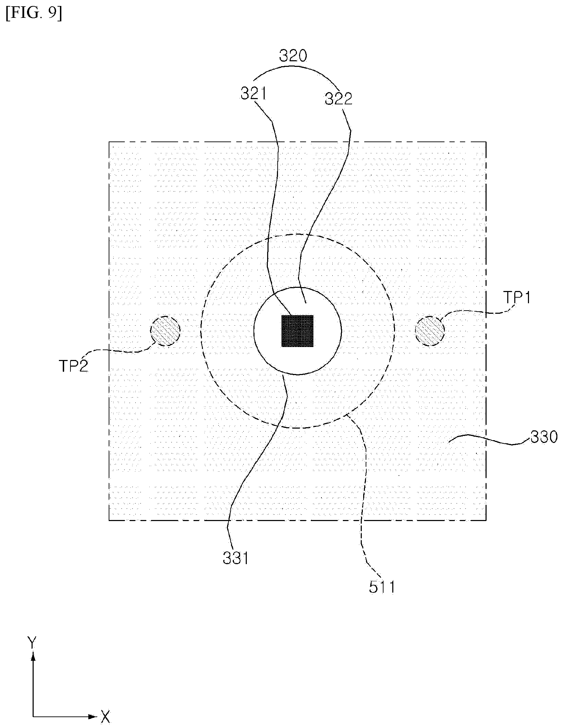

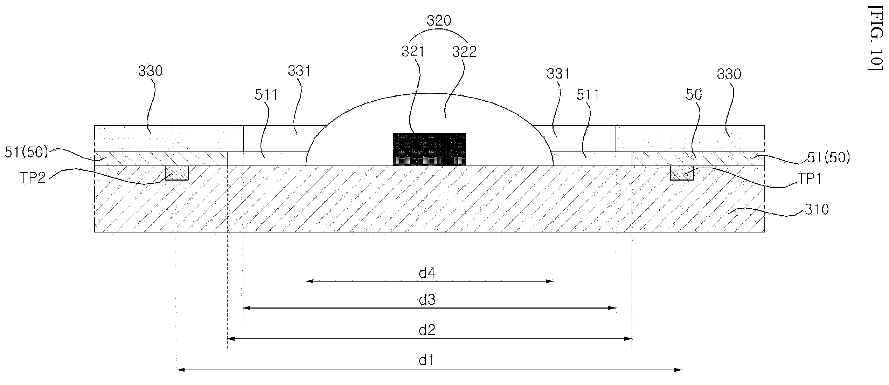

Referring to FIGS. 9 and 10, the reflective sheet 330 may be attached to one surface of the substrate 310. The reflective sheet 330 may be attached to the one surface of the substrate 310 via the first tape 51. In other words, the first tape 51 may be positioned between the one surface of the substrate 310 and the reflective sheet 330, and may be a double-sided tape.

The reflective sheet 330 may include a hole 331. The light assembly 320 may be positioned in the hole 331. The light assembly 320 may protrude with respect to the reflective sheet 330 through the hole 331. A diameter d3 of the hole 331 of the reflective sheet 330 may be equal to the diameter d4 of the lens 322 (as shown in FIG. 9) or may be greater than the diameter d4 of the lens 322 (as shown in FIG. 10).

The diameter d3 of the hole 331 of the reflective sheet 330 may be less than the diameter d2 of the first hole 511 of the first tape 51. Accordingly, the reflective sheet 330 may cover the test points TP1 and TP2 and the first tape 51. As the reflective sheet 330 covers the test points TP1 and TP2, it is possible to prevent light splashing and/or light leakage of the light source 321. In addition, as the reflective sheet 330 covers the test points TP1 and TP2, it is possible to prevent the occurrence of black spots that locally appear on the screen. Further, as the reflective sheet 330 prevents exposure of the tape 51, it is possible to prevent the ingress of foreign matter (or impurities).

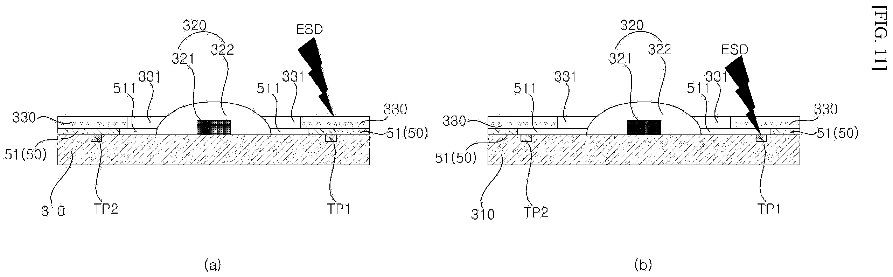

Referring to (b) of FIG. 11, electrostatic discharge (ESD) may flow in through the test points TP1 and TP2, and the electrostatic discharge (ESD) introduced through the test points TP1 and TP2 may be directly applied to the light source 321, which cause the light source 321 to be damaged or destroyed.

Referring to (a) of FIG. 11, when the first tape 51 covers the test points TP1 and TP2, electrostatic discharge (ESD) may not be directly introduced into the test points TP1 and TP2. The electrostatic discharge (ESD) may be absorbed and dissipated or reduced by the first tape 51 covering the test points TP1 and TP2. That is, the first tape 51 may provide a bypass path between the electrostatic discharge (ESD) and the light source 321, or may increase an inflow distance between the electrostatic discharge (ESD) and the light source 321. Accordingly, the electrostatic discharge (ESD) may be dissipated or reduced, thereby preventing damage to the light source 321.

For example, electrostatic discharge (ESD) may occur in the process of attaching the reflective sheet 330 to the substrate 310. For example, electrostatic discharge (ESD) may occur during the assembly process of the backlight unit (30, 40). When the reflective sheet 330 (see FIG. 3) is attached to the substrate 310, static electricity may be generated by friction between the reflective sheet 330 and the substrate 310.

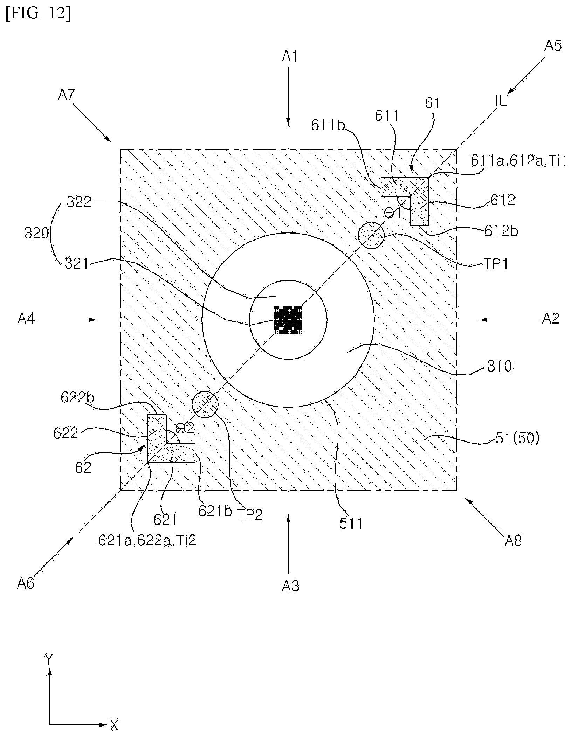

Referring to FIG. 12, ground patterns 61 and 62 may be formed on one surface of the substrate 310. The ground patterns 61 and 62 may be connected to a ground electrode pattern within the substrate 310 and grounded to the outside. For example, the ground electrode pattern be in contact with the frame 70, and electrostatic discharge (ESD) may be grounded to the frame 70. Alternatively, the ground patterns 61 and 62 may be formed through one surface (or a first surface) of the substrate 310 and the other surface (or a second surface) of the substrate 310, which is opposite to the one surface of the substrate 310. In this case, the ground patterns 61 and 62 positioned on the other surface of the substrate 310 may be in contact with the frame 70, and electrostatic discharge (ESD) may be grounded to the frame 70.

For example, the ground patterns 61 and 62 may be a copper foil pattern. For example, the ground patterns 61 and 62 may be formed of the same material as the test points TP1 and TP2.

The ground patterns 61 and 62 may include a first ground pattern 61. The first ground pattern 61 may be positioned adjacent to the first test point TP1. The first ground pattern 61 and the light source 321 may be opposite each other with respect to the first test point TP1. The first ground pattern 61 may be located above the horizontal line HL and to the right of the vertical line VL. The ground patterns 61 and 62 may include a second ground pattern 62. The second ground pattern 62 may be positioned adjacent to the second test point TP2. The second ground pattern 62 and the light source 321 may be opposite each other with respect to the second test point TP2. The second ground pattern 62 may be located below the horizontal line HL and to the left of the vertical line VL. The first ground pattern 61 and the second ground pattern 62 may be opposite each other with respect to the light assembly 320.

The first ground pattern 61 may include a first pattern 611. The first pattern 611 may extend in one direction. For example, the first pattern 611 may extend in the left-right direction. The first pattern 611 may include a first end 611a, and a second end 611b positioned on the opposite side of the first end 611a in the left-right direction. The second end 611b may be located closer to the light source 321 than the first end 611a.

The first ground pattern 61 may include a second pattern 612. The second pattern 612 may be connected to the first pattern 611, and may extend in a direction intersecting a longitudinal direction of the first pattern 611. The second pattern 612 may be connected to the first end 611a of the first pattern 611, and may extend from the first end 611a of the first pattern 611 in a direction intersecting the longitudinal direction of the first pattern 611. For example, the second pattern 612 may extend in the up-down direction.

The second pattern 612 may include a third end 612a connected to the first end 611a of the first pattern 611, and a fourth end 612b positioned on the opposite side of the third end 612a in the up-down direction. The fourth end 612b may be located closer to the light source 321 than the third end 612a.

For example, the first pattern 611 and the second pattern 612 together may form a reverse L-shape.

The first pattern 611 and the second pattern 612 may form a first angle (theta 1). For example, the first angle (theta 1) may be approximately 90 degrees or an acute angle close to 90 degrees. The first end 611a of the first pattern 611 and the first end 612a of the second pattern 612 may meet to form a first tip Ti1. The first tip Ti1 may be a pointy portion. Since electrostatic discharge (ESD) is easily attracted to pointy portions, the first tip Ti1 of the first ground pattern 61 may more effectively guide or direct electrostatic discharge (ESD) to the first ground pattern 61. Accordingly, it is possible to prevent electrostatic discharge (ESD) may from reaching the light source 321, thereby preventing damage or destruction of the light source 321.

The second ground pattern 62 may include a third pattern 621. The third pattern 621 may extend in one direction. The third pattern 621 may extend in a direction parallel to the longitudinal direction of the first pattern 611. For example, the third pattern 621 may extend in the left-right direction. The third pattern 621 may not vertically overlap the first pattern 611. The third pattern 621 may include a first end 621a, and a second end 621b positioned on the opposite side of the first end 621a in the left-right direction. The second end 621b may be located closer to the light source 321 than the first end 621a.

The second ground pattern 62 may include a fourth pattern 624. The fourth pattern 622 may be connected to the third pattern 621, and may extend in a direction intersecting a longitudinal direction of the third pattern 621. The fourth pattern 622 may be connected to the first end 621a of the third pattern 621, and may extend from the first end 621a of the third pattern 621 in a direction intersecting the longitudinal direction of the fourth pattern 621. For example, the fourth pattern 622 may extend in the up-down direction.

The fourth pattern 622 may include a third end 622a connected to the first end 621a of the third pattern 621, and a fourth end 622b positioned on the opposite side of the third end 622a in the up-down direction. The fourth end 622b may be located closer to the light source 321 than the third end 622a.

For example, the third pattern 621 and the fourth pattern 622 together may form an L-shape.

The third pattern 621 and the fourth pattern 622 may form a second angle (theta 2). For example, the second angle (theta 2) may be approximately 90 degrees or an acute angle close to 90 degrees. The first end 621a of the third pattern 621 and the second end 622a of the fourth pattern 622 may meet to form a second tip Ti2. The second tip Ti2 may be a pointy portion. Since electrostatic discharge (ESD) is easily attracted to pointy portions, the second tip Ti2 of the second ground pattern 62 may more effectively guide or direct electrostatic discharge (ESD) to the second ground pattern 62. Accordingly, it is possible to prevent electrostatic discharge (ESD) from reaching the light source 321, thereby preventing damage or destruction of the light source 321.

Electrostatic discharge (ESD) may occur when the reflective sheet 330 (see FIG. 3) is attached to the substrate 310. The ground patterns 61 and 62 may effectively attract static electricity from all directions in which the reflective sheet 330 is attached.

For example, when the reflective sheet 330 is attached in a first direction A1, static electricity may be introduced into the first pattern 611 and grounded through the first ground pattern 61. For example, when the reflective sheet 330 is attached in a second direction A2, static electricity may be introduced into the second pattern 612 and grounded through the first ground pattern 61. For example, when the reflective sheet 330 is attached in a third direction A3, static electricity may be introduced into the third pattern 621 and grounded through the second ground pattern 62. For example, when the reflective sheet 330 is attached in a fourth direction A4, static electricity may be introduced into the fourth pattern 622 and grounded through the second ground pattern 62. For example, when the reflective sheet 330 is attached in a fifth direction A5, static electricity may be introduced into the first tip Ti1 of the first ground pattern 61 and grounded through the first ground pattern 61. For example, when the reflective sheet 330 is attached in a sixth direction A6, static electricity may be introduced into the second tip Ti2 of the second ground pattern 62 and grounded through the second ground pattern 62. For example, when the reflective sheet 330 is attached in a seventh direction A7, static electricity may be introduced into the second end 611b of the first pattern 611 and/or the fourth end 622b of the fourth pattern 622 and then grounded through the first ground pattern 61 and/or the second ground pattern 62. For example, when the reflective sheet 330 is attached in an eighth direction A8, static electricity may be introduced into the fourth end 612b of the second pattern 612 and/or the second end of 621b of the third pattern 621 and then grounded through the first ground pattern 62 and/or the second ground pattern 62.

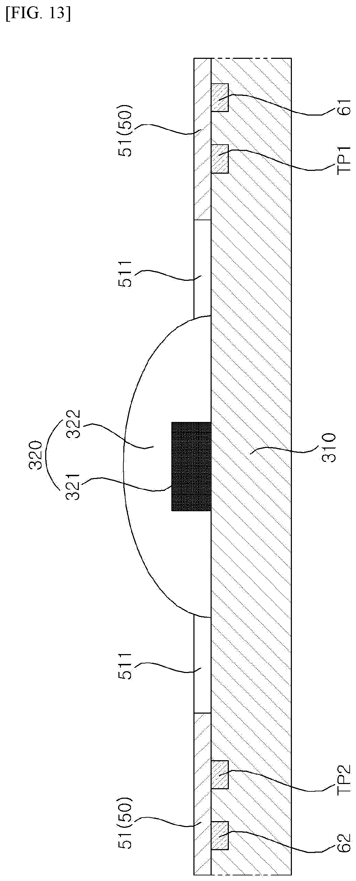

Referring to FIG. 13 together with FIG. 12, the first tape 51 may cover the test points TP1 and TP2 and the ground patterns 61 and 62. Accordingly, electrostatic discharge (ESD) may be absorbed by the first tape 51 and dissipated or reduced. Electrostatic discharge (ESD) may be absorbed by the first tape 51 and then directed to the ground patterns 61 and 62 to be grounded.

Thus, it is possible to prevent electrostatic discharge (ESD) from being applied to the light source 321.

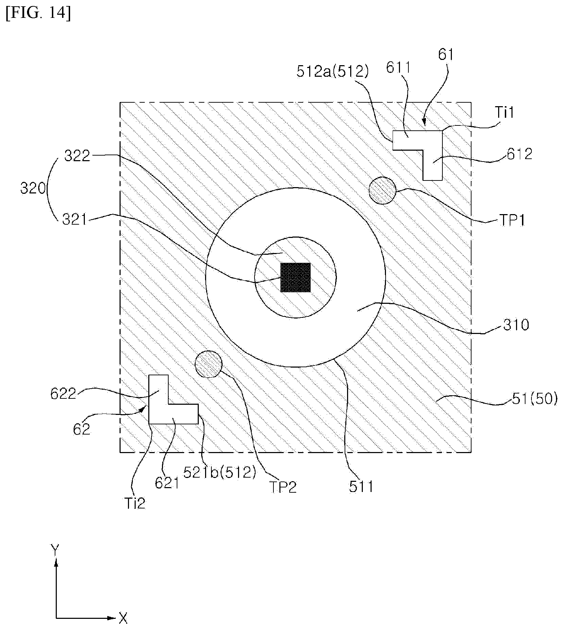

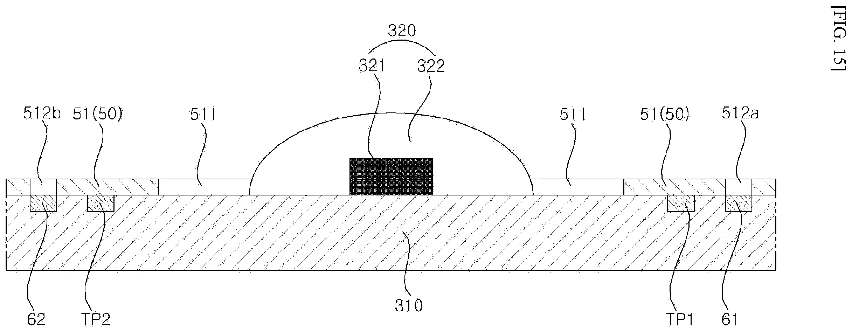

Referring to FIGS. 14 and 15, the first tape 51 may include a second hole 512. The second hole 512 may be formed at a position facing the ground patterns 61 and 62. The second hole 512 may be formed in a shape and size corresponding to the ground patterns 61 and 62. For example, the second hole 512 may include a second hole 512a formed at a position facing the first ground pattern 61, and a second hole 512b formed at a position facing the second ground pattern 62. The first tape 51 may cover the test points TP1 and TP2 and may not cover the ground patterns 61 and 62.

Accordingly, electrostatic discharge (ESD) may be directed to the ground patterns 61 and 62 to be grounded, and residual electrostatic discharge (ESD) that is not directed to the ground patterns 61 and 62 may be absorbed and dissipated by the first tape 51 covering the test points TP1 and TP2. Thus, it is possible to prevent electrostatic discharge (ESD) from being applied to the light source 321.

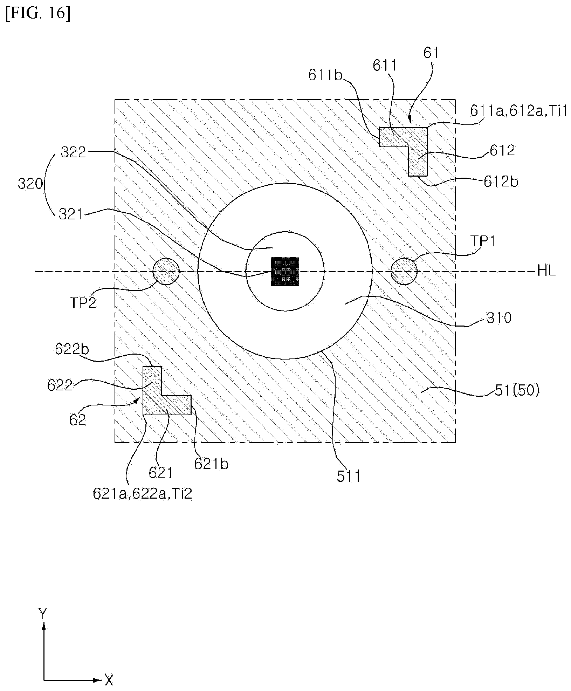

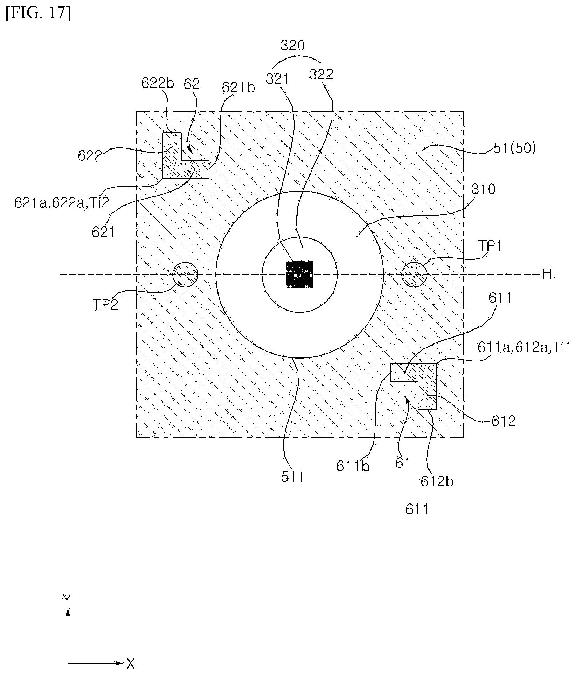

Referring to FIGS. 16 and 17 together with FIG. 12, the ground patterns 61, 62 and the test points TP1, TP2 may be variously positioned relative to each other.

Referring to FIG. 12, the ground patterns 61 and 62 and the test points TP1 and TP2 may be located on an inclined line IL. The inclined line IL may be an imaginary line connecting the first tip Ti1 of the first ground pattern 61, the first test point TP1, the light source 321, the second tip Ti2 of the second ground pattern 62, and the second test point TP2.

Referring to FIG. 16, the test points TP1 and TP2 may be located on a horizontal line HL, and the ground patterns 61 and 62 may be located on an inclined line IL. The horizontal line HL may be an imaginary line connecting the first test point TP1, the light source 321, and the second test point TP2. The inclined line IL may be an imaginary line connecting the first tip Ti1 of the first ground pattern 61, the light source 321, and the second tip Ti2 of the second ground pattern 62. The horizontal line HL and the inclined line IL may intersect.

Referring to FIG. 17, the first ground pattern 61 may be located below and to the right of the light assembly 320, and the second ground pattern 62 may be located above and to the left of the light assembly 320. The test points TP1 and TP2 may be located on a horizontal line HL, and the ground patterns 61 and 62 may be located on an inclined line IL. The second ground pattern 62 may be located above the second test point TP2, and the first ground pattern 61 may be located below the first test point TP1. The horizontal line HL may be an imaginary line connecting the first test point TP1, the light source 321, and the second test point TP2. The inclined line IL may be an imaginary line connecting the first tip Ti1 of the first ground pattern 61, the light source 321, and the second tip Ti2 of the second ground pattern 62. The horizontal line HL and the inclined line IL may intersect.

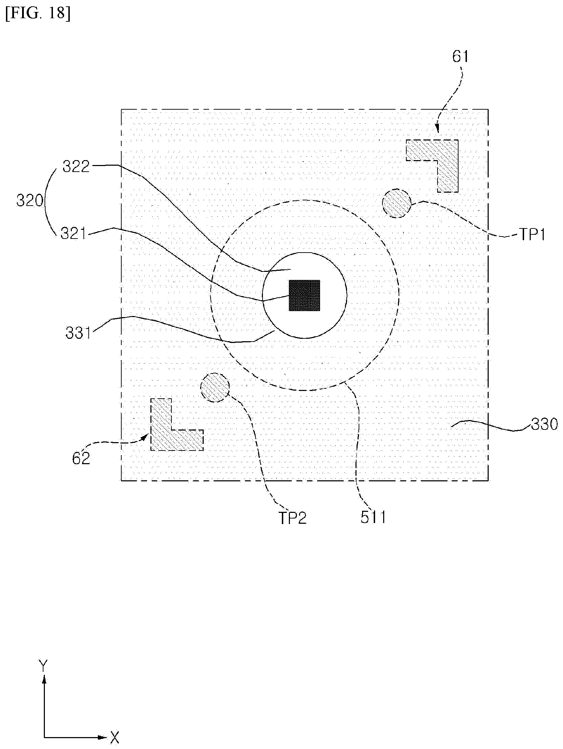

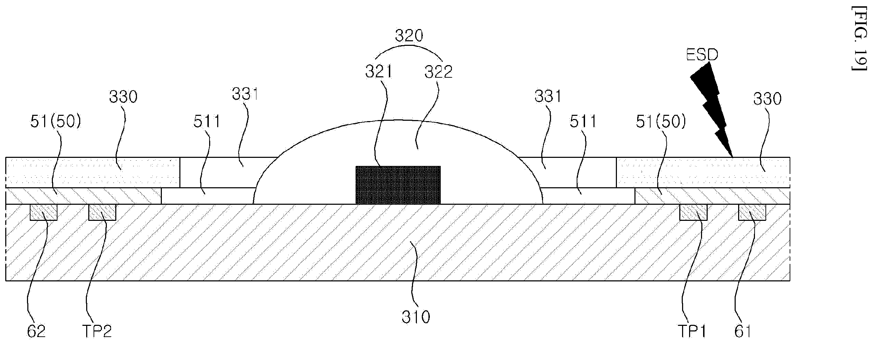

Referring to FIGS. 18 and 19, the reflective sheet 330 may be attached to the substrate 310 via the first tape 51. The reflective sheet 330 may cover the test points TP1 and TP2 and the ground patterns 61 and 62. Electrostatic discharge (ESD) may first be absorbed by the first tape 51 and then directed to the ground patterns 61 and 62 to be grounded. Accordingly, it is possible to prevent electrostatic discharge (ESD) from reaching the light source 321.

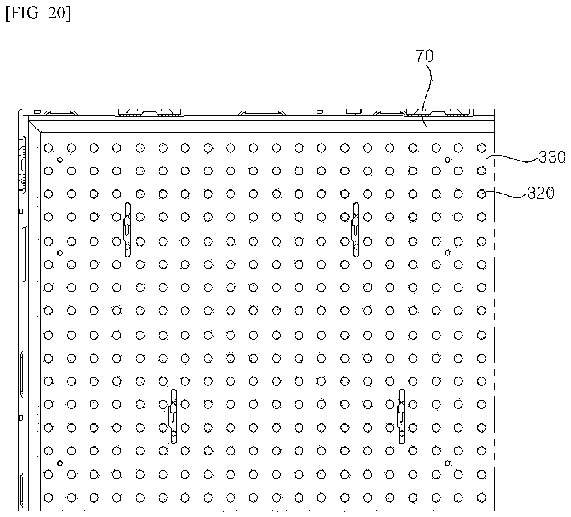

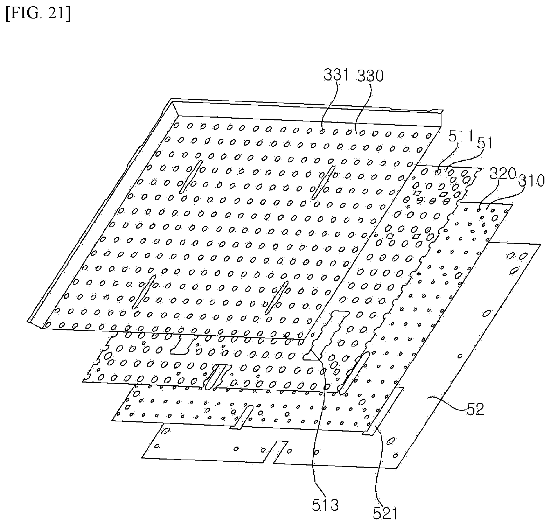

Referring to FIGS. 20 and 21, the tape 50 may include a first tape 51 attached to one surface (or a first surface) of the substrate 310, and a second tape 52 attached to the other surface (or a second surface) of the substrate 310. The light assembly 320 may be mounted on the one surface of the substrate 310. The reflective sheet 330 may be attached to the one surface of the substrate 310. The first tape 51 may attach the reflective sheet 330 to the one surface of the substrate 310. The other surface of the substrate 310 may be attached to the frame 70. The second tape 52 may attach the substrate 310 to the frame 70.

The first tape 51 may further include a third hole 513. A component such as a Zener diode mounted on the one surface of the substrate 310 may be positioned in the third hole 513. Alternatively, a fastening member such as a screw for fixing or securing the substrate 310 may be positioned in the third hole 513.

The second tape 52 may include a fourth hole 521. The fourth hole 521 may be a hole to which a digital signal processor (DSP) connected to the other surface of the substrate 310 is coupled.

Referring to FIGS. 1 to 21, a display device includes: a display panel 10; a frame 70 positioned behind the display panel 10 and to which the display panel 10 is coupled; a substrate 310 disposed between the display panel 10 and the frame 70 and coupled to the frame 70; a light assembly 320 mounted on the substrate 310; a conductive test point TP1, TP2 formed on the substrate 310 and positioned adjacent the light assembly 320; and a tape 50 attached to the substrate 310, having a first hole 511 in which the light assembly 320 is positioned, and covering the test point TP1, TP2.

The test point TP1, TP2 may include: a first test point TP1; and a second test point TP2 positioned opposite the first test point TP1 with respect to the light assembly 320, wherein a diameter d2 of the first hole 511 of the tape 50 may be less than a separation distance d1 between the first test point TP1 and the second test point TP2.

The test point TP1, TP2 may include: a first test point TP1; and a second test point TP2 positioned opposite the first test point TP1 with respect to the light assembly 320, wherein the light assembly 320 may include: a light source 321 mounted on the substrate 310; and a lens 322 having a hemispherical shape, fixed to the substrate 310, and covering the light source 321, wherein a diameter d2 of the first hole 511 of the tape 50 may be greater than a diameter d4 of the lens 322 and less than a separation distance d1 between the first test point TP1 and the second test point TP2.

The display device may further include a reflective sheet 330 attached to the substrate 310 via the tape 50, facing the first hole 511 of the tape 50, and including a hole 331 in which the light assembly 320 is positioned, wherein a diameter d3 of the hole 331 of the reflective sheet 330 may be less than the diameter d2 of the first hole 511 of the tape 50.

The first test point TP1 and the second test point TP2 may be located on a first line HL that is parallel to a left-right direction and passes through a center of the light assembly 320.

The light assembly 320 may include: a light source 321 mounted on the substrate 310; and a lens 322 fixed to the substrate 310 and covering the light source 321, the lens 322 having an elliptical shape with a major axis in a first direction, wherein the first test point TP1 and the second test point TP2 may be located on a first line HL that is parallel to the first direction and passes through a center of the light assembly 320.

The light assembly 320 may include: a light source 321 mounted on the substrate 310; and a lens 322 fixed to the substrate 310 and covering the light source 321, the lens 322 having an elliptical shape with a major axis in a first direction, wherein the first test point TP1 and the second test point TP2 may be located on a second line VL that is parallel to a second direction intersecting the first direction and passes through a center of the light assembly 320.

The light assembly 320 may include: a light source 321 mounted on the substrate 310; and a lens 322 fixed to the substrate 310 and covering the light source 321, the lens 322 having an elliptical shape with a major axis in a first direction, wherein the first test point TP1 and the second test point TP2 may be located on a third line IL that intersects the first direction, is parallel to a second direction forming an acute angle with the first direction, and passes through a center of the light assembly 320.

The display device may further include a conductive first ground pattern 61 formed on the substrate 310 and positioned adjacent to the first test point TP1; and a conductive second ground pattern 62 formed on the substrate 310, positioned adjacent to the second test point TP2, and positioned opposite the first ground pattern 61 with respect to the light assembly 320.

The diameter d2 of the first hole 511 of the tape 50 may be less than a separation distance between the first ground pattern 61 and the second ground pattern 62.

The tape 50 may include: a second hole 512a spaced apart from the first hole 511 and facing the first ground pattern 61; and a third hole 512b spaced apart from the first hole 511, positioned opposite the second hole 512a with respect to the first hole 511, and facing the second ground pattern 62.

The display device may further include a reflective sheet 330 attached to the substrate 310, positioned opposite the substrate 310 with respect to the tape 50, and including a hole 331 having a smaller diameter than the first hole 511 of the tape 50, wherein the reflective sheet 330 may cover the first test point TP1, the second test point TP2, the first ground pattern 61, and the second ground pattern 62.

The substrate 310 may include: a first surface on which the light assembly 320 is mounted 320; a second surface facing the frame 70, wherein the tape 50 may include: a first tape 51 attached to the first surface of the substrate 310 and provided with the first hole 511; and a second tape 52 attached to the second surface of the substrate 310.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings, and a configuration "B" described in another embodiment of the disclosure and the drawings may be combined with each other. Namely, although the combination between the configurations is not directly described, the combination is possible except in the case where it is described that the combination is impossible.

The above detailed description is to be construed in all aspects as illustrative and not restrictive. The scope of the present disclosure should be determined by reasonable interpretation of the appended claims, and all changes coming within the equivalency range of the present disclosure are intended to be embraced in the scope of the present disclosure.

## Claims

1. A display device comprising:
a display panel;
a frame positioned behind the display panel and to which the display panel is coupled;
a substrate disposed between the display panel and the frame and coupled to the frame;
a light assembly mounted on the substrate;
a conductive test point formed on the substrate and positioned adjacent the light assembly; and
a tape attached to the substrate, having a first hole in which the light assembly is positioned, and covering the test point.

2. The display device of claim 1, wherein the test point comprises:
a first test point; and
a second test point positioned opposite the first test point with respect to the light assembly, and
wherein a diameter of the first hole of the tape is less than a separation distance between the first test point and the second test point.

3. The display device of claim 1, wherein the test point comprises:
a first test point; and
a second test point positioned opposite the first test point with respect to the light assembly,
wherein the light assembly comprises:
a light source mounted on the substrate; and
a lens having a hemispherical shape, fixed to the substrate, and covering the light source, and
wherein a diameter of the first hole of the tape is greater than a diameter of the lens and less than a separation distance between the first test point and the second test point.

4. The display device of claim 2, further comprising a reflective sheet attached to the substrate via the tape,
facing the first hole of the tape, and including a hole in which the light assembly is positioned,
wherein a diameter of the hole of the reflective sheet is less than the diameter of the first hole of the tape.

5. The display device of claim 2, wherein the light assembly comprises:
a light source mounted on the substrate; and
a lens fixed to the substrate and covering the light source, the lens having an elliptical shape with a major axis in a first direction, and
wherein the first test point and the second test point are located on a first line which is parallel to the first direction and which passes through a center of the light assembly.

6. The display device of claim 2, wherein the light assembly comprises:
a light source mounted on the substrate; and
a lens fixed to the substrate and covering the light source, the lens having an elliptical shape with a major axis in a first direction, and
wherein the first test point and the second test point are located on a second line which is parallel to a second direction intersecting the first direction and which passes through a center of the light assembly.

7. The display device of claim 2, wherein the light assembly comprises:
a light source mounted on the substrate; and
a lens fixed to the substrate and covering the light source, the lens having an elliptical shape with a major axis in a first direction, and
wherein the first test point and the second test point are located on a third line which intersects the first direction, which is parallel to a second direction forming an acute angle with the first direction, and which passes through a center of the light assembly.

8. The display device of claim 2, further comprising:
a conductive first ground pattern formed on the substrate and positioned adjacent to the first test point; and
a conductive second ground pattern formed on the substrate, positioned adjacent to the second test point, and positioned opposite the first ground pattern with respect to the light assembly.

9. The display device of claim 8, wherein the diameter of the first hole of the tape is less than a separation distance between the first ground pattern and the second ground pattern.

10. The display device of claim 9, wherein the tape comprises:
a second hole spaced apart from the first hole and facing the first ground pattern; and
a third hole spaced apart from the first hole, positioned opposite the second hole with respect to the first hole, and facing the second ground pattern.

11. The display device of claim 10, further comprising a reflective sheet attached to the substrate, positioned opposite the substrate with respect to the tape, and including a hole having a smaller diameter than the first hole of the tape,
wherein the reflective sheet covers the first test point, the second test point, the first ground pattern, and the second ground pattern.

12. The display device of claim 1, wherein the substrate comprises:
one surface on which the light assembly is mounted; and
the other surface facing the frame, and
wherein the tape comprises:
a first tape which is attached to the one surface of the substrate and in which the first hole is formed; and
a second tape attached to the other surface of the substrate.
